# EUROPEAN PATENT SPECIFICATION

(11) **EP 2 951 694 B1**
(45) Date of publication and mention of the grant of the patent: **16.08.2017**
(21) Application number: 13873873.7
(22) Date of filing: 30.01.2013
(51) Int. Cl.: G06F 11/14, G06F 12/16

(54) **RECOVERING PAGES OF A DATABASE**
WIEDERHERSTELLUNG VON SEITEN EINER DATENBANK
RESTAURATION DE PAGES D'UNE BASE DE DONNÉES

(43) Date of publication of application: 09.12.2015
(73) Proprietor: Hewlett Packard Enterprise Development LP, Houston, TX 77070 (US)
(72) Inventor: GRAEFE, Goetz, Madison, Wisconsin 53704 (US); KUNO, Harumi, Palo Alto, California 94304-1100 (US)
(74) Representative: Holt, Daniel Richard
(86) International application number: PCT/US2013/023726
(87) International publication number: WO 2014/120137

(56) References cited:
- WO-A1-2012/092325
- JP-A- H10 320 254
- JP-A- 2008 033 778
- US-A1- 2005 278 394
- US-A1- 2005 278 394
- US-A1- 2006 224 636
- US-A1- 2006 259 518
- US-A1- 2006 259 518
- US-A1- 2012 117 033

## Description

### Background

A database can be stored in a storage system that has one or multiple storage devices. Examples of storage devices can include disk-based storage devices, integrated circuit storage devices, and so forth.

Data loss due to failure of storage devices is a concern. To address the possibility of failure of storage devices, backups of data in the database can be carried out. Backups can include full backups, where the entirety of the database is copied to a backup storage system. Backups can also include differential or incremental backups, where only database data that has changed since the last backup is copied to the backup storage system. As the size of databases has increased, the time associated with carrying out backup operations as well as restore operations (to restore data from a data backup) can be relatively long.

US 2005/0278394 relates to automatic database and file system maintenance and responds to ensure data reliability.

US 2006/0224636 describes a method of automatically restoring a corrupt page in a database.

US 2006/0259518 relates to methods for rapid recovery of database corruption.

US 2012/117033 describes a method of performing a near-instantaneous restore of a database.

### Brief Description Of The Drawings

Some embodiments are described with respect to the following figures:
Fig. 1 is a block diagram of an example arrangement that includes a database system and a backup system to backup data of the database system;
Fig. 2 is a flow diagram of a restore operation according to some implementations;
Fig. 3 is a schematic diagram of operation of a database system and a backup storage system in an instant restore process, according to further implementations; and
Fig. 4 is a schematic diagram of interactions among a database management module, an instant restore module, and a backup storage system, according to further implementations.

### Detailed Description

A challenge associated with recovering a relatively large database from a backup copy of the database is that the restore operation may take a relatively long time to complete. Thus, after a failure of at least one storage device in a system used to store the database, users may not be able to access the database for an extended period of time while the restore operation completes.

In accordance with some implementations of the invention, which is defined in detail in the appended independent claims 1, 7 and 12, an "instant" restore is provided to allow access of a database prior to completion of a restore operation that is carried out to restore the database from failure of at least one storage device of storage media used to store the database. A database can refer to a relational database that stores data in tables. Alternatively, a database can refer to a data repository that can store data according to other formats, or data that is unstructured (not structured according to any specified format or schema).

Instant restore of a database makes the database available prior to completion of a restore operation. Note that the term "instant" does not have to mean that the database is immediately available after a storage media failure. Rather, the term "instant" is used to denote that the availability of the database after storage media failure is sooner than available with traditional restore techniques.

With an instant restore process according to some implementations, after storage media failure and prior to completion of the restore operation, transactions can access data that had been stored on the failed storage media. A transaction can refer to any data operation that reads and/or writes data of the database. A transaction can be initiated in response to a request from a user, an application, or another entity.

The transactions that can be run can include resumed transactions, new transactions, and restarted transactions. New transactions are those transactions that were initiated after the storage media failure. Resumed transactions are those transactions that were actively executing prior to the storage media failure. Such active transactions can be paused upon detection of the storage media failure, and can be resumed in the instant restore process. Restarted transactions are those transactions that were actively executing prior to the storage media failure and that were aborted and then restarted after the storage media failure.

Since the database is made available prior to completion of the restore operation, transactions may encounter pages of the database that were the subject of changes made by transactions prior to the storage media failure. When any such pages are encountered, the pages can be individually recovered on demand. A "page" of a database can refer to any segment of the database. In some examples, the page of the database can be represented by a node of a hierarchical index such as a B-tree index. The B-tree index includes a hierarchical arrangement of nodes, which includes a root node, intermediate nodes, and leaf nodes at the bottom of the B-tree index. Each leaf node represents a respective page of the database. The intermediate nodes can each be associated with a range of keys; child nodes of a given intermediate node are associated with keys within the key range of the given intermediate node. A key includes at least one attribute of data records in the database. As an example, if a database contains data records relating to employees of a company, then an attribute of the data records can be an employee identifier.

In other examples, pages of a database can be represented in a different manner.

A restore operation according to some implementations is thus an instant, on-demand, restore operation in which the database is made available to transactions prior to completion of the restoration of the entirety of the failed storage device's contents, and individual pages of the database can be recovered on demand whenever transactions request such individual pages. If a transaction requests a database page not yet restored or conflicts with a failed transaction not yet rolled back, then individual page redo recovery or individual transaction undo recovery (discussed further below) can be run on demand to ensure that a respective page on replacement storage media (replacing failed storage media) appears up-to-date and online even if that is true for only some of the pages on the replacement storage media.

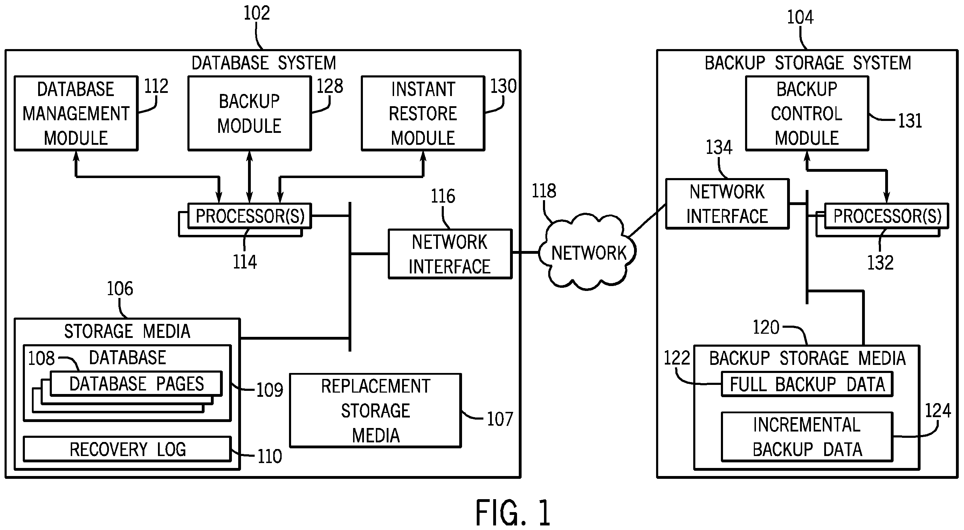

Fig. 1 is a block diagram of an example arrangement that includes a database system 102 and a backup storage system 104. The database system 102 includes storage media 106, which can be implemented with one or multiple storage devices, such as disk-based storage devices (e.g. magnetic or optical disk drives), integrated circuit storage devices (e.g. flash memory devices, battery-backed random access memory devices, phase change memory devices, etc.), and so forth. The storage media 106 stores database pages 108 that are part of a database. As noted above, the database pages 108 can be part of a B-tree index, or can be part of another data structure.

The storage media 106 can also store a recovery or transaction log 110, which records transactions that have made changes to data in the database. A recovery log can refer to any data structure, including one or more files or other data container(s). The recovery log 110 is persistently stored in the storage media 106, such that the recovery log 110 would be available even if the database system 102 were to suffer a system crash or otherwise reset. By recording transactions in the recovery log, those transactions can be repeated by replaying the transactions from the recovery log should a failure prevent their completion for any reason. Note that the storage device(s) used to store the transaction recovery log may be different from the storage device(s) used to store database contents.

The database system 102 also includes a database management module 112, which includes machine-readable instructions executable on one or more processors 114 of the database system 102. The database management module 112 is able to manage access (read access or write access) of the database 109.

The database system 102 also includes a network interface 116 to allow the database system 102 to communicate over a network 118.

Client devices (not shown) are able to access the database system 102 over the network 118. Queries submitted by the client devices are received by the database management module 112, which can issue transactions to access data requested by the queries.

Also, a backup storage system 104 is connected to the database system 102 over the network 118. The backup storage system 104 includes backup storage media 120, which can be implemented with one or multiple storage devices such as disk-based storage devices, integrated circuit storage devices, and so forth. The backup storage media 120 can store full backup data 122 (where a full backup is a backup of all of the database pages 108 of the database in the database system 102), incremental backup data 124 (where an incremental backup is a backup of data changed since a previous backup), and other information. Note that a copy of the recovery log 110 may also be provided in the backup storage media 120. Note also that the backup storage device(s) used to store the transaction recovery log may be different from the backup storage device(s) used to store database contents. Additionally, the database system 102 and the backup storage system 104 may possibly reside on the same physical system(s), although they are drawn as separate components in the example of Fig. 1.

The backup storage system 104 also includes a backup control module 131 that manages access of data in the backup storage media 120. The backup control module 131 can be implemented as machine-readable instructions executable on one or multiple processors 132 of the backup storage system 104. The backup storage system 104 also includes a network interface 134 that allows the backup storage system 104 to communicate over the network 118.

As further shown in Fig. 1, the database system 102 includes a backup module 128 and an instant restore module 130. Although depicted as being part of the database system 102 in Fig. 1, it is noted that the backup module 128 and the instant restore module 130 can be part of a separate system in other implementations, such as part of the backup storage system 104, or part of another system.

The backup module 128 and instant restore module 130 can be implemented with machine-readable instructions that are executable on the processor(s) 114. The backup module 128 controls the backup of the database 109 to the backup storage system 104. The carrying out of backups (full backups or incremental backups) can be according to a backup policy maintained by the backup module 128. For example, the backup policy can specify how frequently backups are to be carried out, and under what conditions a full backup is to be carried out rather than an incremental backup.

The instant restore module 130 can carry out instant restores according to some implementations. The instant restore module 130 can be invoked upon detection of a failure of the storage media 106.

The database system 102 further includes replacement storage media 107, which can include one or multiple storage devices. The replacement storage media 107 is initially empty and can be used as a replacement for any failed storage device(s) in the storage media 106. Note that, in some cases, the replacement storage media may be the same physical storage device as the original storage device. For example, a failed drive may be reformatted and re-used as the replacement storage media. The replacement storage media 107 is used to store data recovered by an instant restore operation according to some implementations. In an example where the replacement storage media 107 is a storage device, then the storage device can be used as a replacement storage device for any of the storage devices in the storage media 106 of the database system 102. The replacement storage device can be immediately available after failure of any of the storage devices in the storage media 106.

During an instant restore process, the instant restore module 130 can cause copying of the portion of the backup data corresponding to the failed storage media, to the replacement storage media 107.

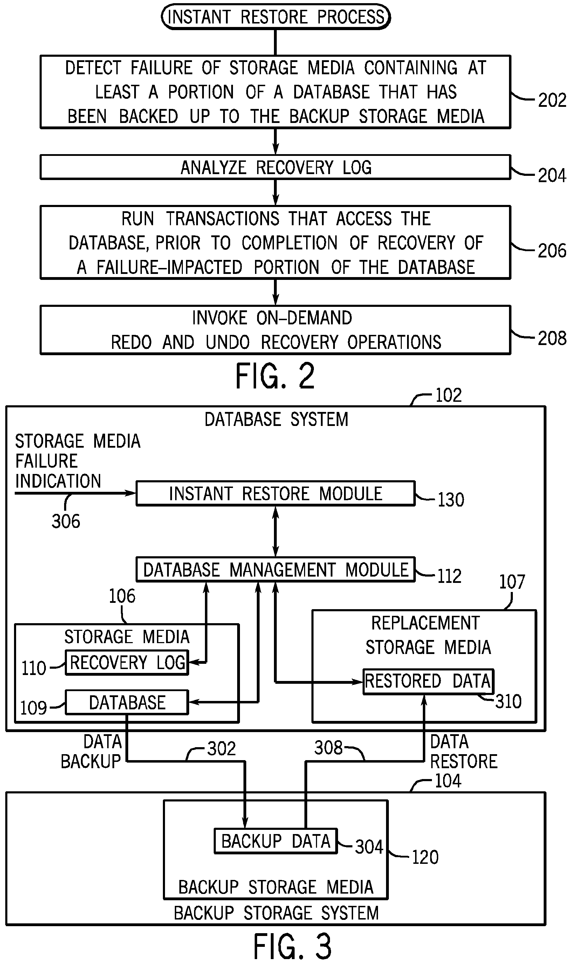

Fig. 2 is a flow diagram of an instant restore process carried out by the instant restore module 130 according to some implementations. The instant restore module 130 detects (at 202) failure of storage media (*e*.*g*. storage media 106) containing at least a portion of the database 109 that has been backed up to the backup storage media 120. The portion of the database 109 on the failed storage media can be referred to as a "failure-impacted portion" of the database in the ensuing discussion. Failure of storage media can refer to failure of a storage device, failure of multiple storage devices, failure of a portion of a storage device, and so forth. The failure of the storage media can cause the database to no longer be accessible, unless a restore of the failure-impacted portion of the database stored in the failed storage media is carried out.

In response to detecting the failure, the instant restore module 130 can cause copying of a portion of backup data at the backup storage media 120 corresponding to the failure-impacted portion of the database 109, to the replacement storage media 107. Note that at this stage, the data in the replacement storage media 107 is likely not up-to-date since changes made by the transactions in the recovery log 110 are not reflected in the data restored from the backup data to the replacement storage media 107.

Also, in response to detecting the failure, the instant restore module 130 analyzes (at 204) a recovery log, such as the recovery log 110 or a copy of the recovery log 110, that includes transactions carried out with respect to the database 109. Analyzing the recovery log can include analyzing a portion of the recovery log that includes transactions since a last backup was carried out of the database 109. The last backup can be a full backup or an incremental backup.

For more efficient recovery log analysis, the recovery log 110 can be divided into multiple segments, such as different segments corresponding to different storage devices of the storage media 106. Thus, when a particular storage device fails, the recovery log analysis can analyze just the recovery log segment corresponding to the particular storage device, and the remaining recovery log segments do not have to be analyzed.

For more efficient recovery log analysis, the recovery log 110 can also be divided into multiple segments using other policies. For example, different segments can correspond to different time segments of the recovery log, or to different categories of transactions (*e*.*g*. banking transactions versus order shipping transactions). Thus, when a particular storage device fails, the recovery log analysis can analyze just the recovery log segment corresponding to the particular storage device (or some other recovery log segment), and the remaining recovery log segments do not have to be analyzed. The analysis of the recovery log identifies "redo" recovery operations and "undo" recovery operations. A redo recovery operation refers to repeating a change that was made to data of the database. An undo recovery operation refers to undoing a change made to data in the database. Although the analysis of the recovery log identifies redo recovery operations and undo recovery operations, it is noted that the identified redo recovery operations and undo recovery operations are not run immediately. Rather, the redo and undo recovery operations can be run incrementally and on demand as part of the instant restore process.

In some examples, the output of the recovery log analysis can include a list of database pages that are the subject of redo recovery operations, and a list of transactions that are the subject of undo recovery operations. Also, for each page associated with a redo recovery operation and each transaction associated with an undo recovery operation, the relevant log records of the recovery log can be identified, along with any relevant locks. A lock refers to a mechanism that can be associated with a unit of data (such as a database page) that allows one transaction to carry out a data access operation with respect to the unit of data without interference from another transaction. For example, a write transaction can place a write lock on a database page, which prevents another transaction from accessing (read access or write access) the database page.

As part of the recovery log analysis, a determination of whether redo recovery operations or undo recovery operations are to be carried out is based on a determination of whether a transaction recorded in the recovery log committed or did not commit prior to the storage media failure. If the storage media failed before the transaction committed, then the transaction is rolled back (by carrying out an undo recovery operation). On the other hand, if the transaction committed before the storage media failure, then the actions in the transaction are repeated in a redo recovery operation.

In some cases, prior to storage media failure, rollback may already have started on a particular transaction, and the rollback may have logged some compensation actions. A compensation action can refer to an action that can be used to undo another action. In the context where a rollback has logged a compensation action, then such compensation action can be used to undo what the rollback has carried out. Logging a compensation action can refer to adding a record to the recovery log that describes this compensation action. To redo the rollback in the instant restore process, a redo recovery operation can ensure the persistence of the logged compensation actions-in other words, the redo recovery operation ensures that the compensation actions for the rollback are kept available until the rollback completes (in case an undo of the rollback has to be carried out for whatever reason).

More generally, when an undo recovery operation is carried out, the undo recovery operation can invoke and log appropriate compensation actions.

As further depicted in Fig. 2, the instant restore module 130 allows running (at 206) of transactions that access the database 109 in the database system 102, prior to completion of recovery of the failure-impacted portion of the database 109 from the backup storage media 120. In some implementations, the instant restore module 130 can send a message to the database management module 112 to indicate that transactions can run after detection of the storage media failure. Note that the transactions can be run prior to carrying out any of the redo and undo recovery operations identified in the recovery log analysis.

In response to the message from the instant restore module 130, the database management module 112 runs transactions in the database system 102. The transactions include new transactions and resumed transactions.

The instant restore module 130 can invoke (at 208) on-demand redo and undo recovery operations identified in the output of the recovery log analysis (at 204), as the individual pages are accessed by the running transactions. The invoked on-demand redo recovery operations can carry out recovery of individual pages of the failure-impacted portion of the database 109. Note that the on-demand recovery of individual pages focuses on the pages that are accessed by active transactions. Recovery of the remaining pages of the failure-impacted portion of the database 109 can occur during idle time intervals, or whenever an explicit command is provided to do so.

Undo recovery operations can be carried out on-demand when it is detected that new transactions conflict with a transaction that failed due to storage media failure.

As noted above, resumed transactions are those transactions that were actively executing prior to the storage media failure. If recovery from a storage media failure appears instant, as is possible using an instant restore process according to some implementations, active transactions that have accessed the failed storage media may not have to be rolled back. Instead, those transactions can be resumed by the instant restore operation. During log analysis carried out at 204, these transactions can be paused. However, after the log analysis, the transactions can resume. As transactions resume, they may trigger on-demand redo recovery operations just like new transactions run after storage media failure. If a new, restarted, or resumed transaction eventually fails or is aborted, then techniques for carrying out transaction rollback can be applied. For example, a new transaction run after storage media failure may get into a deadlock situation with a transaction run before storage media failure, and a deadlock resolution mechanism may choose to abort either the new transaction or the older transaction. Thus, on-demand redo recovery operations of database pages may be carried out early in a resumed transaction, with subsequent rollback of those changes. Similarly, transactions can be restarted after the log analysis, and may trigger on-demand redo recovery operations, such as transactions started or resumed after storage media failure or on-demand undo operations such as transactions aborted after storage media failure.

When a running transaction accesses a database page, the status of the database page is checked. Checking the status of the database page involves checking whether the database page has to be recovered. For example, checking the status of the database page may involve checking whether the page is already known to have been recovered or to have been stable at the time of the storage media failure, and then checking the output of the recovery log analysis to determine whether the database page is associated with a change to the database page prior to the storage media failure. If so, then recovery of the individual database page is invoked, where the recovery can be a redo recovery operation or an undo recovery operation. During the instant restore process, the backup storage media 120 can remain in read-only mode, although the replacement storage media 107 can be in read-write mode (to allow read and write of the replacement storage media 107). Also, note that an individual page recovery can repeat all updates of the database page since the last backup was taken.

As noted above, if a lock conflict is detected between a new transaction (a transaction that runs in the database system 102 after the storage media failure) and a transaction that failed due to the storage media failure, the failed transaction rolls back. Rolling back the failed transaction refers to undoing data changes made by the failed transaction, by carrying out an undo recovery operation. Incremental lock release during rollback and partial rollback can be carried out as part of an undo recovery operation. Partial rollback can refer to undoing a portion of changes made to data in a given transaction. Partial lock release can refer to release of a subset of the locks associated with the given transaction.

Fig. 3 is a schematic diagram illustrating an example operation of an instant restore process according to some implementations. As depicted, a data backup 302 is carried out from the database 109 to the backup storage media 120, to cause backup data 304 to be stored in the backup storage media 120. The backup data 304 can include any one or some combination of the full backup data 122 and incremental backup data 124 of Fig. 1.

At some point, the instant restore module 130 receives an indication 306 of failure of the storage media 106. In response to the indication 306, the instant restore module 130 initiates an instant restore process, which includes carrying out a data restore 308 to copy a data portion from the backup data 304 to the replacement storage media 107 (for storage as restored data 310). The portion of the backup data 304 copied includes the backup data portion associated with the failed storage media.

In some cases, pages of the backup data 304 can be accessed using page identifiers. In other implementations where the backup data 304 is compressed, an index can be provided that maps page identifiers to offset locations in a file (or files) containing the backup data 304.

For faster search in differential backup data, bit vector filters can be employed. A bit vector filter includes an arrangement of bits, where each bit corresponds to a respective database page. The bit if set to a predefined value indicates that the database page is not in the respective differential backup data. Using a bit vector filter allows for skipping of a futile search in a differential backup data file.

The instant restore module 130 can also start an analysis of the recovery log 110 in response to the failure indication 306. After the recovery log analysis is carried out, the instant restore module 130 can send an indication to the database management module 112 to permit the database management module 112 to run transactions (including new transactions and resumed transactions).

The transactions can cause on-demand redo and undo recovery operations, as the transactions access database pages, which can be carried out with respect to data in the database 109 (which includes the restored data 310). As the redo and undo recovery operations are carried out, the restored data 310 becomes more up-to-date.

In some alternative implementations, self-repairing B-trees can be employed. A self-repairing B-tree is a B-tree index in which a node of the B-tree index contains a pointer to a backup image of the data contained in the node. The pointer can be a pointer to the most recent backup image for the data of the node. Each node can also contain a pointer into the recovery log 110, and more specifically, a pointer to the most recent log record pertaining to the page represented by the node. This pointer is referred to as PageLSN (page log sequence number). The PageLSN identifies the recovery log record that was most recently applied to the respective page.

Additionally, each child pointer in a parent node (parent-to-child pointer) is paired with a pointer into the recovery log 110. This parent-to-child pointer is the expected PageLSN in the child node; and if the child node is up-to-date, the child node's PageLSN is equal to or higher than the expected PageLSN.

A root-to-leaf B-tree traversal (carried out as part of one or multiple transactions) can determine, based on the PageLSNs of the nodes, whether a B-tree node is up-to-date, and can invoke an individual page redo recovery operation if the B-tree node is not up-to-date.

In further implementations, for more efficient analysis of the recovery log 110, log records in the recovery log 110 pertaining to the failed storage media are first extracted. The analysis can then be carried out on the extracted log records that pertain to the failed storage media (rather than an analysis over all of the storage media). Carrying out analysis on a subset of the recovery log increases the likelihood that the analyzed portion can be cached in higher-speed memory, thus improving on-demand redo and undo recovery operations.

In additional implementations, log information in the recovery log 110 that becomes obsolete can be disregarded, to achieve more efficient recovery log analysis (as carried out at 204 in Fig. 2). Accumulation of log information for a transaction in a recovery log record initially includes undo information, which is information used to undo the transaction. When a log analysis encounters a transaction's commit record that indicates a transaction abort, the accumulated undo information becomes obsolete and may be dropped (does not have to be analyzed further).

Similarly, certain redo information may be determined to be obsolete when a log analysis encounters a matching compensation log record. The exception to this rule is a case in which a rollback pertains to a different page than the original update, e.g. if a B-tree entry moves among nodes between update and rollback due to split or merge operations among B-tree nodes.

In some implementations, preparation of the recovery log 110 for efficient on-demand restore can occur during the log analysis (as carried out at 204 after a storage media failure), or the preparation can run as part of the archiving process of the recovery log (to store the recovery log in persistent storage). Examples of preparation of the recovery log 110 for efficient on-demand restore can include partitioning the recovery log 110 into segments by storage device or by tables, aggregation of related log records, and compression of log records.

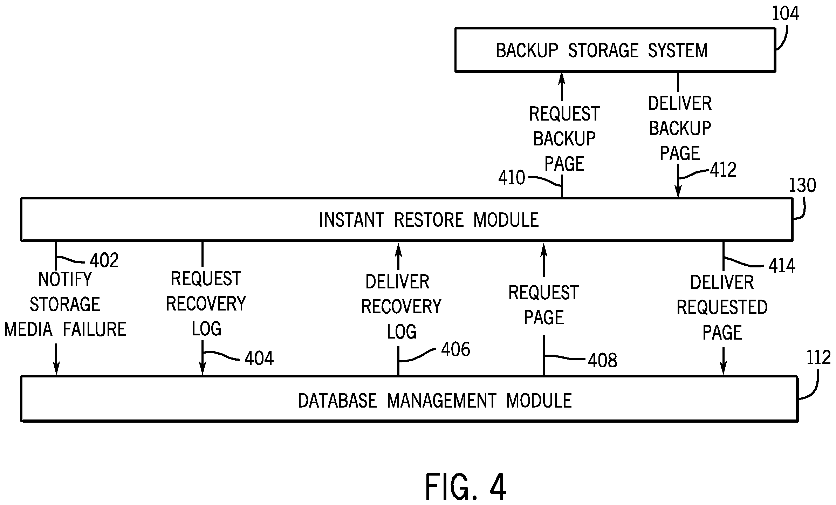

Fig. 4 illustrates an example operation in which various interactions among the database management module 112, instant restore module 130, and backup storage system 104 are depicted. Note that the various interactions do not have to occur in the sequence depicted in Fig. 4-in other examples, a different sequence may be employed.

The instant restore module 130 notifies (at 402) the database management module 112 of a storage media failure, which was detected based on the storage media failure indication 306 of Fig. 3. The instant restore module 130 also requests (at 404) the recovery log 110 from the database management module 112. The database management module 112 delivers (at 406) the recovery log 110 (or a portion of the recovery log 110) to the instant restore module 130.

At some point, the database management module 112 is permitted to run transactions. In response to a page requested by a transaction that has not yet been updated after the storage media failure, the database management module 112 requests (at 408) the page from the instant restore module 130. In response, the instant restore module 130 can request (at 410) the respective backup page from the backup storage system 104. The requested backup page is delivered (at 412) by the backup storage system 104 to the instant restore module 130. After applying any respective redo or undo recovery operation with respect to the delivered backup page, the instant restore module 130 can deliver (at 414) the requested page (requested at 408) to the database management module 112.

Machine-readable instructions of various modules described above (including 112, 128, 130, and 131 of Fig. 1) are loaded for execution on a processor or multiple processors (such as 114 or 132 in Fig. 1). A processor can include a microprocessor, microcontroller, processor module or subsystem, programmable integrated circuit, programmable gate array, or another control or computing device.

Data and instructions are stored in respective storage devices, which are implemented as one or multiple computer-readable or machine-readable storage media. The storage media include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; optical media such as compact disks (CDs) or digital video disks (DVDs); or other types of storage devices. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the foregoing description, numerous details are set forth to provide an understanding of the subject disclosed herein. However, implementations may be practiced without some or all of these details. Other implementations may include modifications and variations from the details discussed above. It is intended that the appended claims cover such modifications and variations.

## Claims

1. A method comprising:
detecting (202) failure of storage media (106) containing at least a portion of a database (109) that has been backed up to backup media (120);
in response to detecting the failure, starting a restore operation, the restore operation to restore data from a backup (122) of the database (109) on the backup media (120), and the restore operation comprising:
copying data from the backup media (120) to replacement media (107);
identifying redo recovery operations and undo recovery operations from a recovery log (110) recording transactions carried out with respect to the database prior to the storage media failure;
causing running (206) of new transactions that access the database prior to completion of the restore operation; and
carrying out (208) selected ones of the identified redo recovery operations and the undo recovery operations on-demand based on access of the database (109) by the running transactions.

2. The method of claim 1, wherein carrying out (208) selected ones of the identified recovery operations updates restored data.

3. The method of claim 1, wherein carrying out a particular one of the identified redo recover operations comprises retrieving a version of a particular page associated with the recovery operation from data backed up to the backup media (120), and applying a redo of a change to the version of the particular page using information in the log.

4. The method of claim 1, wherein at least one of the undo recovery operations is used to roll back a data change that did not commit prior to the failure of the storage media.

5. The method of claim 1, further comprising carrying out at least one of the undo recovery operations in response to detecting that at least one of the running transactions has a lock conflict with a transaction that was running at the time of the failure of the storage media.

6. The method of claim 1 , further comprising:
using a self-repairing B-tree to store pages of the database, wherein carrying out at least one of the running transactions involves traversing the self-repairing B-tree; and
using information in the self-repairing B-tree during the traversing to determine that an individual page of the database is not up-of-date.

7. A system comprising:
a storage media (106) to store a database (109);
at least one processor (114); and
a recovery module (130) executable on the at least one processor to:
receive an indication (402) of failure of the storage media (106);
start a restore operation in response to the indication of failure (402), the restore operation to restore data from a backup (122) of the database (109), and the restore operation comprising:
copying data from the backup (122) to replacement media (107);
identifying redo recovery operations and undo recovery operations from a recovery log (110) that recorded transactions carried out with respect to the database prior to the storage media failure (109);
causing running of new transactions that access the database prior to completion of the restore operation; and
carrying out selected ones of the identified redo recovery operations and the undo recovery operations on-demand based on access of the database by the running transactions.

8. The system of claim 7, wherein the recovery log (110) is partitioned into a plurality of segments, and wherein identifying the redo and undo recovery operations is based on analyzing less than all of the plurality of segments.

9. The system of claim 7, wherein the identifying is based on analyzing the recovery log (110), and wherein the analyzing detects obsolete undo and redo information in the recovery log (110).

10. The system of claim 7, wherein the transactions are run prior to carrying out any of the redo and undo recovery operations.

11. The system of claim 7, wherein each of the redo recovery operations is to repeat a change made to data, and each of the undo recovery operations is to roll back a transaction.

12. A computer program product comprising computer program code that, when said computer program code is executed on a processor, implements the method of any of claims 1 to 6.

## Patentansprüche

1. Verfahren, Folgendes umfassend:
Erkennen (202) eines Fehlers von Speichermedien (106), die wenigstens einen Teil einer Datenbank (109), der in Sicherungsmedien (120) gesichert worden ist, enthalten;
als Reaktion auf das Erkennen des Fehlers, Starten eines Zurückstellungsvorgangs, wobei der Zurückstellungsvorgang Daten von einer Sicherung (122) der Datenbank (109) auf den Sicherungsmedien (120) zurückstellt, und wobei der Zurückstellungsvorgang Folgendes umfasst:
Kopieren von Daten aus den Sicherungsmedien (120) in Ersatzmedien (107);
Identifizieren von Wiederholungs-Wiederherstellungsvorgängen und Rückgängig-Wiederherstellungsvorgängen von einem Wiederherstellungsprotokoll (110), das bezogen auf die Datenbank vor dem Speichermedienfehler durchgeführte Transaktionen aufzeichnet;
Bewirken des Ausführens (206) von neuen Transaktionen, die vor dem Vervollständigen des Zurückstellungsvorgangs auf die Datenbank zugreifen; und
Durchführen (208) ausgewählter der identifizierten Wiederholungs-Wiederherstellungsvorgänge und der Rückgängig-Wiederherstellungsvorgänge nach Bedarf basierend auf ein Zugreifen auf die Datenbank (109) durch die laufenden Transaktionen.

2. Verfahren nach Anspruch 1, wobei das Durchführen (208) ausgewählter der identifizierten Wiederherstellungsvorgänge zurückgestellte Daten aktualisiert.

3. Verfahren nach Anspruch 1, wobei das Durchführen eines bestimmten der identifizierten Wiederholungs-Wiederherstellungsvorgänge das Abrufen einer Version einer bestimmten Seite, die mit dem Wiederherstellungsvorgang von in die Sicherungsmedien (120) gesicherten Daten verknüpft ist, und Anwenden einer Wiederholung einer Änderung an der Version der bestimmten Seite unter Verwendung von Informationen im Protokoll umfasst.

4. Verfahren nach Anspruch 1, wobei wenigstens einer der Rückgängig-Wiederherstellungsvorgänge verwendet wird, um eine Datenänderung, die vor dem Fehler der Speichermedien nicht eingespeichert worden ist, zurückzusetzen.

5. Verfahren nach Anspruch 1, ferner umfassend das Durchführen wenigstens eines der Rückgängig-Wiederherstellungsvorgänge als Reaktion auf das Erkennen, dass wenigstens eine der laufenden Transaktionen einen Sperrkonflikt mit einer zum Zeitpunkt des Fehlers der Speichermedien laufenden Transaktion aufweist.

6. Verfahren nach Anspruch 1, ferner Folgendes umfassend:
Verwenden eines sich selbst reparierenden B-Baums zum Speichern von Seiten der Datenbank, wobei das Durchführen wenigstens einer der laufenden Transaktionen das Durchlaufen des sich selbst reparierenden B-Baums einbezieht; und
Verwenden von Informationen im sich selbst reparierenden B-Baum beim Durchlaufen, um zu bestimmen, dass eine einzelne Seite der Datenbank nicht aktuell ist.

7. System, Folgendes umfassend:
Speichermedien (106) zum Speichern einer Datenbank (109);
wenigstens einen Prozessor (114); und
ein Wiederherstellungsmodul (130), das auf dem wenigstens einen Prozessor ausführbar ist zum:
Empfangen eines Hinweises (402) eines Fehlers der Speichermedien (106);
Starten eines Zurückstellungsvorgangs als Reaktion auf den Hinweis eines Fehlers (402), wobei der Zurückstellungsvorgang Daten von einer Sicherung (122) der Datenbank (109) zurückstellt, und wobei der Zurückstellungsvorgang Folgendes umfasst:
Kopieren von Daten aus der Sicherung (122) in Ersatzmedien (107);
Identifizieren von Wiederholungs-Wiederherstellungsvorgängen und Rückgängig-Wiederherstellungsvorgängen von einem Wiederherstellungsprotokoll (110), das bezogen auf die Datenbank vor dem Speichermedienfehler (109) durchgeführte Transaktionen aufzeichnete;
Bewirken des Ausführens von neuen Transaktionen, die vor dem Vervollständigen des Zurückstellungsvorgangs auf die Datenbank zugreifen; und
Durchführen ausgewählter der identifizierten Wiederholungs-Wiederherstellungsvorgänge und der Rückgängig-Wiederherstellungsvorgänge nach Bedarf basierend auf ein Zugreifen auf die Datenbank durch die laufenden Transaktionen.

8. System nach Anspruch 7, wobei das Wiederherstellungsprotokoll (110) in mehrere Segmente aufgeteilt wird und wobei das Identifizieren der Wiederholungs- und Rückgängig-Wiederherstellungsvorgänge auf dem Analysieren weniger als aller der mehreren Segmente basiert.

9. System nach Anspruch 7, wobei das Identifizieren auf dem Analysieren des Wiederherstellungsprotokolls (110) basiert und wobei das Analysieren veraltete Wiederholungs- und Rückgängig-Informationen im Wiederherstellungsprotokoll (110) erkennt.

10. System nach Anspruch 7, wobei die Transaktionen vor dem Durchführen jeglicher der Wiederholungs- und Rückgängig-Wiederherstellungsvorgänge ausgeführt werden.

11. System nach Anspruch 7, wobei jeder der Wiederholungs-Wiederherstellungsvorgänge ein Wiederholen einer an den Daten vorgenommenen Änderung ist und jeder der Rückgängig-Wiederherstellungsvorgänge ein Zurücksetzen einer Transaktion ist.

12. Computerprogrammprodukt, umfassend Computerprogrammcode, der, wenn der Computerprogrammcode auf einem Prozessor ausgeführt wird, das Verfahren nach einem der Ansprüche 1 bis 6 implementiert.

## Revendications

1. Procédé comprenant :
la détection (202) d'une défaillance de support de stockage (106) contenant au moins une partie d'une base de données (109) qui a été sauvegardée sur un support de sauvegarde (120) ;
en réponse à la détection de la défaillance, le démarrage d'une opération de restauration, l'opération de restauration pour restaurer des données à partir d'une sauvegarde (122) de la base de données (109) sur le support de sauvegarde (120), et l'opération de restauration comprenant :
la copie de données du support de sauvegarde (120) sur un support de remplacement (107) ;
l'identification d'opérations de récupération de rétablissement et d'opérations de récupération d'annulation à partir d'un journal de récupération (110) enregistrant des transactions réalisées par rapport à la base de données avant la défaillance de support de stockage ;
le fait de provoquer l'exécution (206) de nouvelles transactions qui accèdent à la base de données avant l'achèvement de l'opération de restauration ; et
la réalisation (208) de certaines des opérations de récupération de rétablissement et des opérations de récupération d'annulation identifiées sur demande sur la base de l'accès de la base de données (109) par les transactions en cours.

2. Procédé selon la revendication 1, dans lequel la réalisation (208) de certaines des opérations de récupération identifiées met à jour des données restaurées.

3. Procédé selon la revendication 1, dans lequel la réalisation d'une certaine des opérations de récupération de rétablissement identifiées comprend l'extraction d'une version d'une page particulière associée à l'opération de récupération à partir de données sauvegardées sur le support de sauvegarde (120), et l'application d'un rétablissement d'une modification à la version de la page particulière à l'aide des informations dans le journal.

4. Procédé selon la revendication 1, dans lequel au moins une des opérations de récupération d'annulation est utilisée pour annuler une modification de données qui n'a pas été validée avant la défaillance du support de stockage.

5. Procédé selon la revendication 1, comprenant en outre la réalisation d'au moins une des opérations de récupération d'annulation en réponse à la détection qu'au moins une des transactions en cours a un conflit de verrouillage avec une transaction qui était en cours au moment de la défaillance du support de stockage.

6. Procédé selon la revendication 1, comprenant en outre :
l'utilisation d'une arborescence B auto-réparatrice pour stocker des pages de la base de données, dans lequel la réalisation d'au moins une des transactions en cours implique la traversée de l'arborescence B auto-réparatrice ; et
l'utilisation d'informations dans l'arborescence B auto-réparatrice pendant la traversée pour déterminer qu'une page individuelle de la base de données n'est pas à jour.

7. Système comprenant :
un support de stockage (106) pour stocker une base de données (109) ;
au moins un processeur (114) ; et
un module de récupération (130) exécutable sur ledit processeur pour :
recevoir une indication (402) de défaillance du support de stockage (106) ;
démarrer une opération de restauration en réponse à l'indication de défaillance (402), l'opération de restauration pour restaurer des données à partir d'une sauvegarde (122) de la base de données (109), et l'opération de restauration comprenant :
la copie de données de la sauvegarde (122) sur un support de remplacement (107) ;
l'identification d'opérations de récupération de rétablissement et d'opérations de récupération d'annulation à partir d'un journal de récupération (110) qui a enregistré des transactions réalisées par rapport à la base de données avant la défaillance de support de stockage (109) ;
le fait de provoquer l'exécution de nouvelles transactions qui accèdent à la base de données avant l'achèvement de l'opération de restauration ; et
la réalisation de certaines des opérations de récupération de rétablissement et des opérations de récupération d'annulation identifiées sur demande sur la base de l'accès de la base de données par les transactions en cours.

8. Système selon la revendication 7, dans lequel le journal de récupération (110) est divisé en une pluralité de segments, et dans lequel l'identification des opérations de récupération de rétablissement et d'annulation est basée sur l'analyse de moins que le total de la pluralité de segments.

9. Système selon la revendication 7, dans lequel l'identification est basée sur l'analyse du journal de récupération (110), et dans lequel l'analyse détecte des informations de rétablissement et d'annulation obsolètes dans le journal de récupération (110).

10. Système selon la revendication 7, dans lequel les transactions sont exécutées avant de réaliser l'une quelconque des opérations de récupération de rétablissement et d'annulation.

11. Système selon la revendication 7, dans lequel chacune des opérations de récupération de rétablissement consiste à répéter une modification apportée à des données, et chacune des opérations de récupération d'annulation consiste à annuler une transaction.

12. Produit de programme informatique comprenant un code de programme informatique qui, lorsque ledit code de programme informatique est exécuté sur un processeur, met en oeuvre le procédé selon l'une quelconque des revendications 1 à 6.
